# EUROPEAN PATENT APPLICATION

(11) **EP 4 734 401 A1**
(43) Date of publication of application: **29.04.2026**
(21) Application number: 23943533.2
(22) Date of filing: 26.06.2023
(51) Int. Cl.: H04B 10/25

(54) **REFERENCE FREQUENCY SIGNAL TRANSMISSION METHOD AND FREQUENCY TRANSMISSION SYSTEM**

(71) Applicant: NTT, Inc., Tokyo 100-8116 (JP)
(72) Inventor: NISHIYAMA, Kota, Musashino-shi, Tokyo 180-8585 (JP); SUGIYAMA, Ryuta, Musashino-shi, Tokyo 180-8585 (JP)
(74) Representative: Dehns
(86) International application number: PCT/JP2023/023526
(87) International publication number: WO 2025/004128

(57) **Abstract**

A reference frequency necessary for meeting a standard for hold-over is supplied to a time reference device (ePRTC) at a remote location via an optical network 30. It is not necessary to prepare a plurality of high-precision frequency reference devices or the like that generates the reference frequency for each place of the time reference device. In a transmission side node N1, an optical frequency comb 12 generates an optical signal SG2 converted into a communication wavelength band while suppressing deterioration in frequency precision by being synchronized with a signal SG1 of the reference frequency, and the optical signal SG2 is transmitted to the optical network 30 via an optical frequency repeater 13. In a reception side node N2, an optical signal SG4 received from the optical network 30 is passed via an optical frequency repeater 16 and input into an optical frequency comb 17, and a frequency signal synchronized with the received signal is generated. A time reference device 18 performs a time hold-over with precision within the standard by using the frequency of a signal SG6 output from the optical frequency comb 17. The optical frequency repeaters 13 and 16 eliminate influence of fiber noise.

## Description

### Technical Field

The present invention relates to a reference frequency signal transmission method and a frequency transmission system.

### Background Art

A communication carrier sometimes provides accurate time information as a communication service to each terminal of a large number of users existing in various places. Accordingly, the communication carrier has a time synchronization network and a frequency synchronization network as communication equipment necessary for distributing accurate time information to each user.

For example, Non Patent Literature 1 discloses an optical frequency distribution technique using an optical frequency repeater. In addition, Non Patent Literature 2 discloses a standard (ITU-T G.8272.1) of a high-precision time reference device: enhanced primary reference time clocks (ePRTC) necessary for the time synchronization network. In more addition, Non Patent Literature 3 discloses a standard (ITU-T G.8262) of a synchronous ethernet equipment clock (EEC) necessary for the frequency synchronization network.

### Citation List

### Non Patent Literature

Non Patent Literature 1: T. AKATSUKA, et al., "Optical frequency distribution using laser repeater stations with planar lightwave circuits", Optics Express, vol. 28, no. 7, March 2020.
Non Patent Literature 2: "Timing characteristics of enhanced primary reference time clocks", Recommendation ITU-T G.8272.1/Y.1367.1, ITU-T.
Non Patent Literature 3: "Timing characteristics of synchronous equipment slave clock", Recommendation ITU-T G.8262/Y.1362, ITU-T.

### Summary of Invention

### Technical Problem

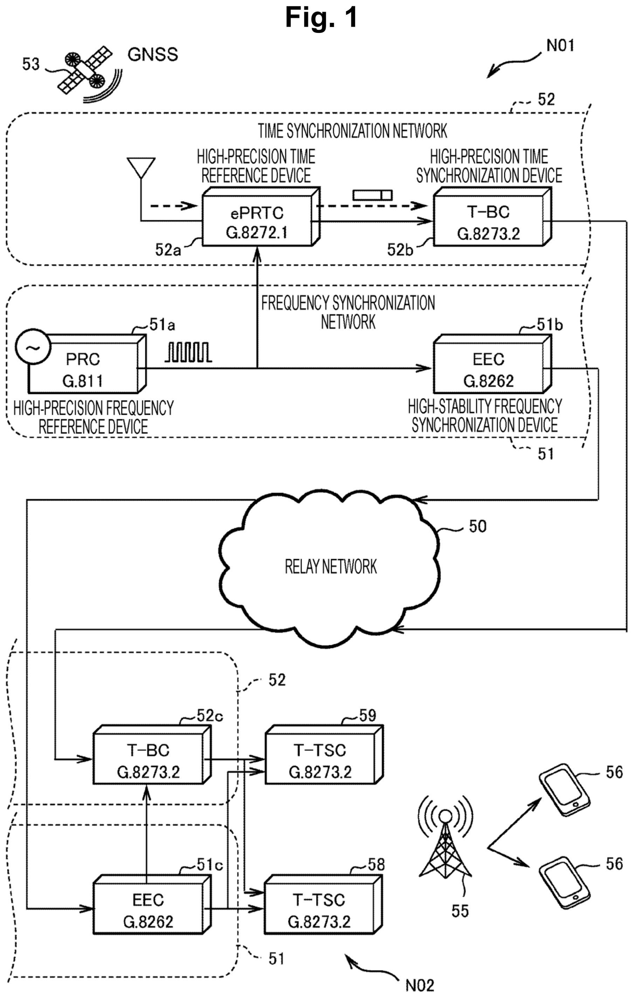

In order to provide time information to a user terminal 56 of each user, the communication carrier normally uses a communication system having the configuration as illustrated in Fig. 1. The communication system illustrated in Fig. 1 includes a frequency synchronization network 51 and a time synchronization network 52. The time synchronization network 52 in Fig. 1 includes a high-precision time reference device (ePRTC) 52a and high-precision time synchronization devices: telecom boundary clock (T-BC) 52b and 52c. In addition, a communication node N01 at a place where the high-precision time reference device 52a and the high-precision time synchronization device 52b are disposed and a communication node N02 at a place where the high-precision time synchronization device 52c is disposed are connected via a relay network 50.

In addition, the frequency synchronization network 51 in Fig. 1 includes a high-precision frequency reference device: primary reference clock (PRC) 51a and high-stability frequency synchronization devices (EEC) 51b and 51c. Further, the high-stability frequency synchronization device 51b disposed in the communication node N01 and the high-stability frequency synchronization device 51c disposed in the communication node N02 are connected via the relay network 50. Furthermore, the outputs of the high-stability frequency synchronization device 51c and the high-precision time synchronization device 52c are connected to time information supply devices 58 and 59 that supply the time to the end applications, respectively. The time information supply devices 58 and 59 are referred to as a telecom-time slave clock (T-TSC), terminate a precision time protocol (PTP) packet, and supply the time to the end application.

The high-precision time reference device 52a can grasp high-precision reference time information from a signal obtained by receiving a radio wave arriving from a satellite of a global navigation satellite system (GNSS) 53 through an antenna ANT.

The high-precision reference time information obtained at the position of the communication node N01 is distributed in a time-synchronized state from the high-precision time synchronization device 52b via the relay network 50 to each of the nodes existing at other places. The information of the reference time distributed to each communication node N02 is distributed to the application software on each user terminal 56 via, for example, a radio base station 55 and used.

The time synchronization can be performed, for example, on the basis of time stamp information stamped in a precision time protocol (PTP) packet distributed using the relay network 50 or the like. However, when the PTP packet is dropped due to network congestion or the like, a situation occurs in which the time synchronization cannot be temporarily performed. In such a case, the time synchronization can be maintained for a certain period of time by performing frequency synchronization on the basis of the clock frequency distributed using the frequency synchronization network 51.

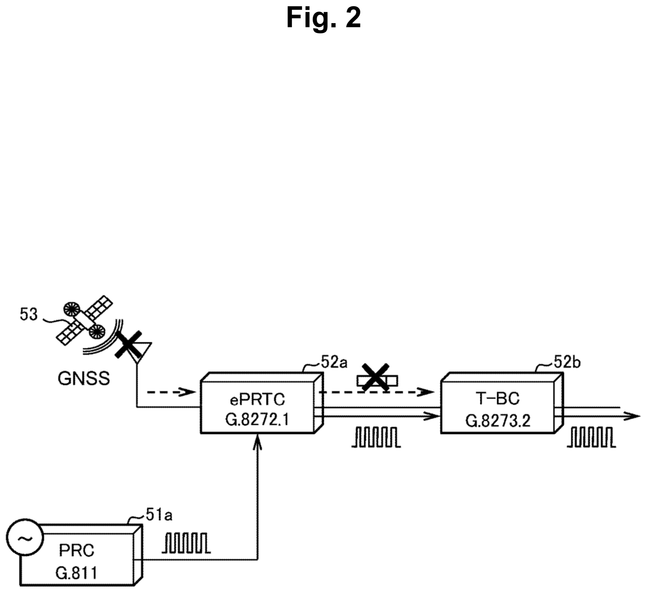

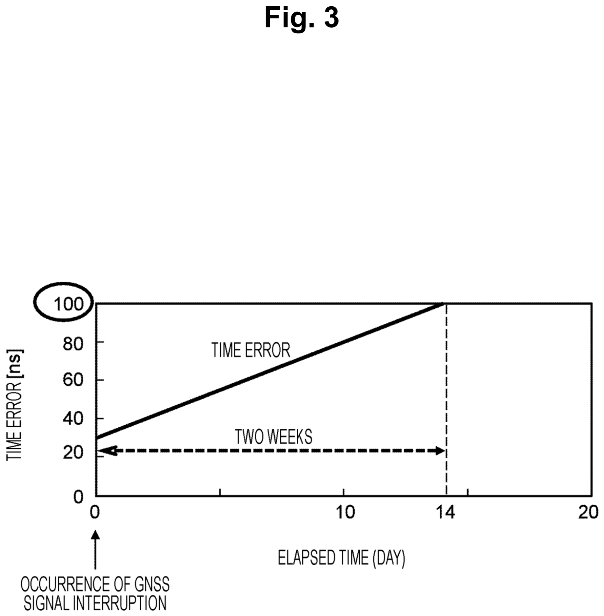

In another case, the signal of a GNSS 53 received by the high-precision time reference device 52a is temporarily interrupted at the position of the communication node N01. Fig. 2 illustrates an example of a signal flow in a situation in which the signal of the GNSS 53 is temporarily interrupted. In addition, Fig. 3 illustrates a standard temporal change of a time error occurring in the time synchronization.

For example, as illustrated in Fig. 2, when the signal of the GNSS received by the high-precision time reference device 52a is interrupted, the high-precision time reference device 52a cannot perform the time synchronization, and the high-precision time reference device 52a cannot transmit the PTP packet to the high-precision time synchronization device 52b.

However, the high-precision time reference device 52a, which is the ePRTC, can maintain the time synchronization for a certain period even when the signal of the GNSS is interrupted. For example, when the signal of GNSS is interrupted, the high-precision time reference device 52a in Figs. 1 and 2 can maintain highly precise time synchronization for a certain period of time on the basis of the reference frequency generated by the high-precision frequency reference device 51a.

In the standard "ITU-T G.8272.1" described in Non Patent Literature 2, a standard (enhanced PRTC) of 100 [ns] in two weeks is established as an allowable error of time synchronization maintenance (hold-over) in a case where a primary reference time clock (PRTC) cannot receive the GNSS. Therefore, the ePRTC needs to maintain the time synchronization within the time error in the graph illustrated in Fig. 3. In addition, in the standard "ITU-T G.8272.1", in order to enhance the performance of hold-over, it is required to supply a highly precise frequency by connecting a primary reference clock (PRC) to the ePRTC.

For example, in order to achieve the performance of the hold-over as illustrated in Fig. 3, it is necessary to avoid precision degradation of the frequency input from the high-precision frequency reference device into each ePRTC. Therefore, in a case where there are a large number of ePRTCs at respective bases in various places, a configuration is assumed in which a large number of high-precision frequency reference devices are prepared and the ePRTC and the high-precision frequency reference device are directly connected to each other in each place.

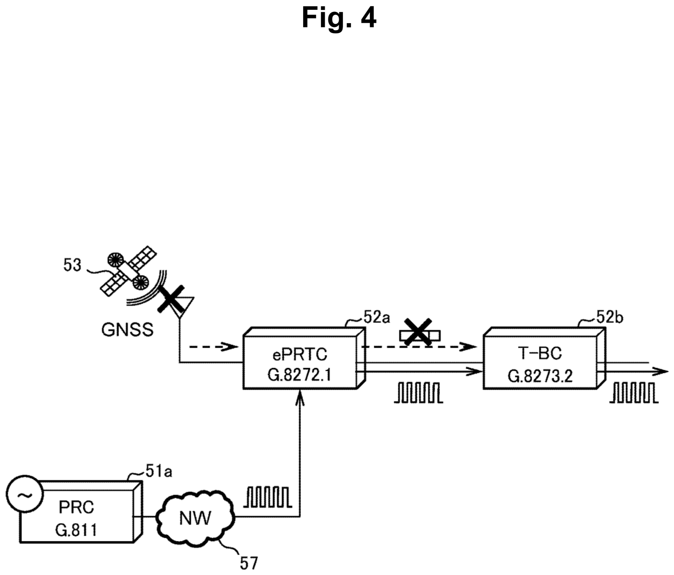

However, because the high-precision frequency reference device is very expensive, it is not feasible to prepare a large number of high-precision frequency reference devices. Therefore, as in the configuration illustrated in Fig. 4, it is feasible to relay a signal of a frequency output from the high-precision frequency reference device 51a through a relay network (NW) 57 and supply the relayed signal of the frequency to the high-precision time reference device 52a existing in a place different from that of the high-precision frequency reference device 51a.

However, in a case where the signal of the frequency is relayed through a network of a transmission line including an optical fiber, an influence of fiber noise referred to as "wander" appears. Due to the influence of the wander, the technique of the synchronous Ethernet (Non Patent Literature 3) cannot obtain the time synchronization performance satisfying the condition of the allowable error of the hold-over necessary for the ePRTC, that is, the time error illustrated in Fig. 3.

The present invention has been made in view of the above circumstances, and an object of the present invention is to provide a reference frequency signal transmission method and a frequency transmission system that do not require preparation of expensive equipment like a high-precision frequency reference device for each place even in a case where high-precision time synchronization is required for each of a plurality of time reference devices (ePRTCs) at places distant from each other.

### Solution to Problem

The present invention provides a reference frequency signal transmission method, including:
using a communication system capable of transmitting a highly precise frequency signal between a plurality of communication nodes connected to an optical network,
inputting, at a transmission side communication node, a first reference frequency signal into a first optical frequency comb;
connecting, in the transmission side communication node, an output converted into a communication wavelength band while suppressing deterioration in frequency precision using the first optical frequency comb to an input of a first optical frequency repeater having a fiber noise compensation function;
transmitting an output of the first optical frequency repeater from the transmission side communication node to the optical network;
inputting, in a reception side communication node, an optical signal received from the optical network into a second optical frequency repeater having the fiber noise compensation function;
inputting an output of the second optical frequency repeater into a second optical frequency comb; and
acquiring a second reference frequency signal as a highly precise frequency signal from an output of the second optical frequency comb.

### Advantageous Effects of Invention

According to the reference frequency signal transmission method and the frequency transmission system of the present invention, it is possible to convert a high-precision reference frequency supplied from a high-precision frequency reference device into a communication wavelength band while suppressing deterioration in frequency precision, and transmit a highly precise reference frequency to a remote location while compensating for an influence of fiber noise occurring during relaying a signal through an optical network. Therefore, even when a plurality of time reference devices (ePRTCs) at places distant from each other requires highly precise time synchronization respectively, the present invention makes it unnecessary to prepare expensive equipment like a high-precision frequency reference device for each place.

### Brief Description of Drawings

Fig. 1 is a block diagram illustrating a configuration example of a general communication system that delivers reference time information to each user.
Fig. 2 is a block diagram illustrating an operation example of a reference time device in a case where a GNSS signal is interrupted.
Fig. 3 is a graph illustrating an allowable value of a time error at a time of hold-over in the standard.
Fig. 4 is a block diagram illustrating a configuration example of a generally assumed communication system.
Fig. 5 is a block diagram illustrating a configuration example of a reference frequency transmission system according to an embodiment of the present invention.
Fig. 6 is a time chart illustrating an example of a waveform in a time domain in a signal of an optical frequency comb.
Fig. 7 is a graph illustrating an example of a spectral distribution in a frequency domain in the signal of the optical frequency comb.
Fig. 8 is a block diagram illustrating main functions in respective optical frequency repeaters at a transmission side and a reception side.

### Description of Embodiments

Hereinbelow, an embodiment of the present invention is described with reference to the drawings.

### <Configuration of Communication System>

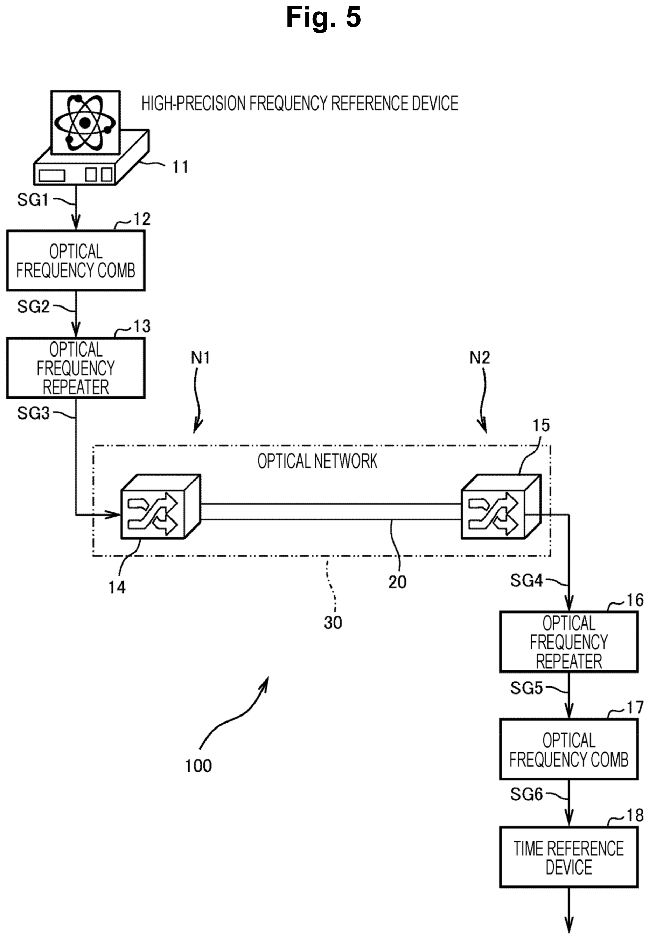

A configuration example of main parts of a reference frequency transmission system 100 in the embodiment of the present invention is illustrated in Fig. 5. The reference frequency transmission system 100 in Fig. 5 can be used, for example, in the communication system illustrated in Fig. 4 when a signal of a highly precise reference frequency obtained at an output of the high-precision frequency reference device 51a is input into the high-precision time reference device 52a via a relay network 57.

Therefore, the high-precision frequency reference device 51a and the high-precision time reference device 52a in Fig. 4 can be disposed respectively in communication nodes at different positions from each other. However, in the configuration of Fig. 4, because an optical signal of the reference frequency is affected by the fiber noise when transmitted via the relay network 57, it is difficult for the communication node on a downstream side of the relay network 57 to maintain the time error within a range of the allowable error when the GNSS signal is interrupted.

On the other hand, the reference frequency transmission system 100 illustrated in Fig. 5 has a function of removing the influence of the fiber noise generated in the network from the optical signal of the reference frequency as described later. Therefore, even in the communication node on the downstream side of the network, it is easy to maintain the time error within the range of the allowable error.

In the reference frequency transmission system 100 illustrated in Fig. 5, the two communication nodes N1 and N2 disposed at places distant from each other are connected via an optical network 30. That is, an optical transmission device 14 disposed on the communication node N1 side and an optical transmission device 15 disposed on the communication node N2 side are connected via a fiber transmission line 20.

In the example illustrated in Fig. 5, a high-precision frequency reference device 11, an optical frequency comb 12, and an optical frequency repeater 13 are disposed at the communication node N1 side.

The high-precision frequency reference device 11 has sufficient precision to meet a standard for a time hold-over in the ePRTC. In the example illustrated in Fig. 5, a signal SG1 output from the high-precision frequency reference device 11 is a sine wave electric signal having a frequency of 10 [MHz]. The signal SG1 output from the high-precision frequency reference device 11 is input into the optical frequency comb 12.

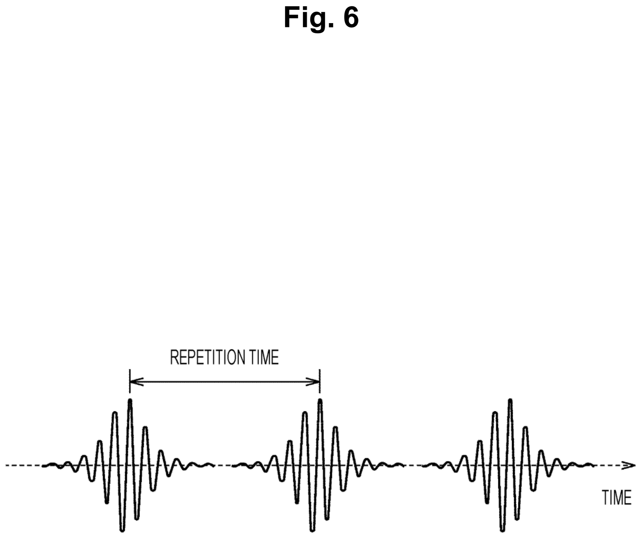

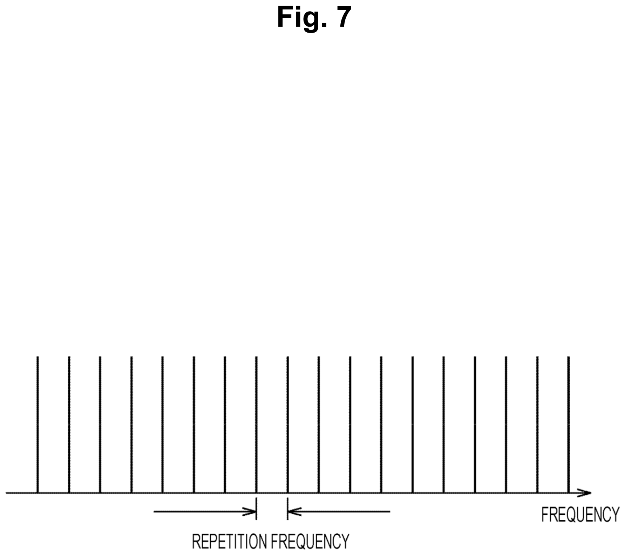

Fig. 6 illustrates an example of a waveform of a time domain in an optical signal generated by a general optical frequency comb, and Fig. 7 illustrates an example of a spectral distribution of a frequency domain in an optical signal generated by the optical frequency comb. That is, as illustrated in Fig. 6, the optical frequency comb generates laser beams repeatedly occurring at a regular time interval. In addition, as illustrated in Fig. 7, the laser beam has a large number of line spectra adjacent on the frequency axis arranged at equal intervals and each frequency component distributed in a comb shape.

The optical frequency comb 12 illustrated in Fig. 5 controls a repetition frequency (interval between line spectra) of the laser beam as illustrated in Figs. 6 and 7 which are generated therein so as to lock (synchronize) the repetition frequency to the frequency of the signal SG1 of 10 [MHz] input from the high-precision frequency reference device 11. As a result, the repetition frequency of the laser beam generated by the optical frequency comb 12 is stabilized with the same precision as that of the high-precision frequency reference device 11. When the signal SG1 having a predetermined frequency is input from the high-precision frequency reference device 11, the optical frequency comb 12 can convert the signal SG1 into a signal SG2 in a communication wavelength band while suppressing deterioration in frequency precision.

The highly precise and stable laser beam generated by the optical frequency comb 12 is input into the optical frequency repeater 13 as the signal SG2. The optical frequency repeater 13 has a function for removing the influence of the fiber noise (wander) occurring on the fiber transmission line 20. This function is described below.

The highly precise and stable laser beam generated by the optical frequency comb 12, that is, the signal SG2 passes through the optical frequency repeater 13 and is input into the optical transmission device 14 of the optical network 30 as a signal SG3. The signal SG3 is transmitted from the optical transmission device 14 on the communication node N1 side in the form of an optical signal as it is, and is transmitted via the fiber transmission line 20 to the optical transmission device 15 on the communication node N2 side.

On the other hand, on the communication node N2 side, there are disposed an optical frequency repeater 16, an optical frequency comb 17, and a time reference device 18.

The optical signal received from the fiber transmission line 20 by the optical transmission device 15 on the communication node N2 side is input into the optical frequency repeater 16 as a signal SG4 in the form of the optical signal as it is. The optical frequency repeater 16 has a function for removing the influence of the fiber noise generated in the fiber transmission line 20 from the optical signal received by the optical transmission device 15. In practice, the influence of the fiber noise is removed by a combination of both the operation of the optical frequency repeater 13 of the transmission side node and the operation of the optical frequency repeater 16 of the reception side node.

The signal SG4 passes through the optical frequency repeater 16 and is input into the optical frequency comb 17 as a signal SG5 in a form as an optical signal. The optical frequency comb 17, similarly to the optical frequency comb 12 of the transmission side node, oscillates a comb-like frequency spectrum arranged at equal intervals as illustrated in Figs. 6 and 7. In addition, the optical frequency comb 17 on the reception node side controls the repetition frequency of the laser beam generated therein so as to lock (synchronize) the repetition frequency with the frequency of the input signal SG5.

As a result, the repetition frequency of the laser beam generated by the optical frequency comb 17 is synchronized with the optical signal of the reference frequency received via the optical network 30. That is, the repetition frequency of the laser beam generated by the optical frequency comb 17 is stabilized with the same precision as the high-precision frequency reference device 11 on the transmission node side.

In the present embodiment, the optical frequency comb 17 has a function of converting an internally generated laser beam into an electrical signal and outputting the electrical signal as a signal SG6, or outputs a highly precise optical pulse frequency of the optical frequency comb, photoelectrically converts the optical pulse into an electric signal, and outputs the electric signal as the signal SG6. The signal SG6 is, for example, a sine wave electric signal having a frequency of 10 [MHz]. If the repetition frequency of the laser beam internally generated by the optical frequency comb 17 is higher than 10 [MHz], the frequency can be converted using a frequency divider to be an electric signal having a frequency of 10 [MHz].

In the reference frequency transmission system 100 of Fig. 5, the signal SG6 output from the optical frequency comb 17 is input into the time reference device 18. The time reference device 18 has a function corresponding to, for example, that of the high-precision time reference device 52a illustrated in Fig. 4, that is, the ePRTC.

The time reference device 18 can usually generate highly precise reference time information by being synchronized with the time of a signal received as a radio wave from a satellite of the GNSS 53. On the other hand, when the signal from the GNSS 53 is interrupted, in order to reduce the time error of the reference time grasped by the time reference device 18, the time reference device 18 grasps the reference frequency according to the signal SG6 input from the optical frequency comb 17, and performs the time hold-over since the time when the GNSS is interrupted using the reference frequency. As a result, the time error of the reference time generated by the time reference device 18 can be maintained within the standard for hold-over.

Here, because a signal having the reference frequency used by the time reference device 18 is transmitted from the communication node N1 to the communication node N2 as an optical signal passing through the optical network 30, it is not necessary to dispose the high-precision frequency reference device 11 at the same position as the communication node N2 where the time reference device 18 is located. That is, even in a communication system in which it is necessary to dispose a plurality of time reference devices 18 in various places different from each other, the number of high-precision frequency reference devices 11 required is only one, which allows providing highly precise reference time information to users in various places while suppressing an increase in equipment cost.

### <Detailed Description of Optical Frequency Repeater>

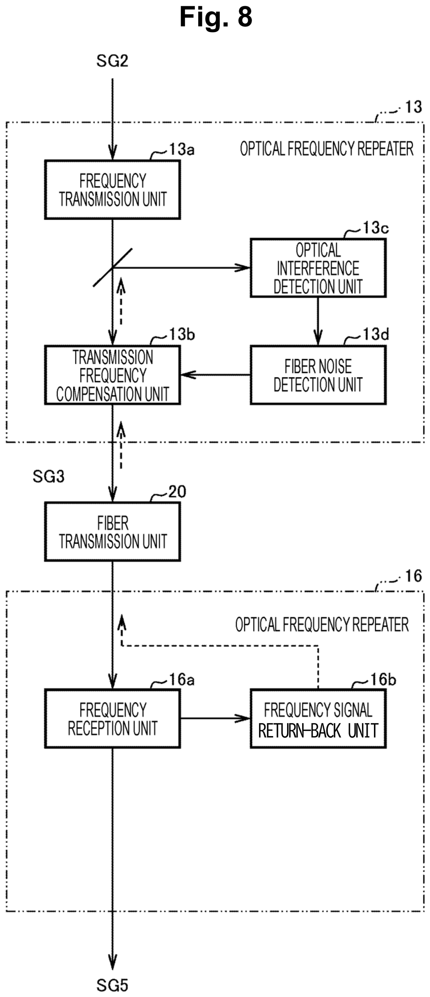

The main functions of the optical frequency repeaters 13 and 16 on the transmission side and reception side are illustrated in Fig. 8.

As illustrated in Fig. 8, the optical frequency repeater 13 on the transmission side includes a frequency transmission unit 13a, a transmission frequency compensation unit 13b, an optical interference detection unit 13c, and a fiber noise detection unit 13d. In addition, the optical frequency repeater 16 on the reception side includes a frequency reception unit 16a and a frequency signal return-back unit 16b.

The signal SG2 input into the optical frequency repeater 13 as an optical signal is transmitted from the frequency transmission unit 13a, passes through the transmission frequency compensation unit 13b, and is input into the optical frequency repeater 16 on the reception side via the fiber transmission line 20 as the signal SG3.

A part of the signal SG3 input from the fiber transmission line 20 by the optical frequency repeater 16 is output as the signal SG5 via the frequency reception unit 16a. In addition, the part of the signal SG3 input from the fiber transmission line 20 by the optical frequency repeater 16 is input from the frequency reception unit 16a into the frequency signal return-back unit 16b.

The frequency signal return-back unit 16b internally generates a relay laser beam and controls the relay laser beam so that it is synchronized with the frequency and the phase of the signal SG3 received from the fiber transmission line 20 by the frequency reception unit 16a. Then, as a return-back optical frequency signal, the frequency signal return-back unit 16b transmits the relay laser beam to the fiber transmission line 20 as indicated by an arrow indicated by a broken line in Fig. 8.

The optical frequency repeater 13 on the transmission side receives the optical frequency signal returned back from the reception side via the fiber transmission line 20. The optical frequency signal received by the optical frequency repeater 13 is input into the optical interference detection unit 13c through the transmission frequency compensation unit 13b and a mirror as indicated by an arrow indicated by a broken line in Fig. 8. In addition, a part of the optical signal transmitted by the frequency transmission unit 13a is also passed through the mirror and input into the optical interference detection unit 13c.

Therefore, the optical interference detection unit 13c can detect an optical interference between the optical signal transmitted by the frequency transmission unit 13a and the optical signal returned back on the reception side to come back to the transmission side. This optical interference corresponds to the fiber noise generated in the fiber transmission line 20.

The fiber noise detection unit 13d detects the fiber noise in the fiber transmission line 20 on the basis of the optical interference detected by the optical interference detection unit 13c and controls the transmission frequency compensation unit 13b to compensate for the fiber noise. For example, in a case in which the fiber noise generated on the optical signal by one-way passage through the fiber transmission line 20 is "Φ (t)", the optical interference corresponding to "2Φ (t)" is detected by the optical interference detection unit 13c. Then, the fiber noise detection unit 13d controls the transmission frequency compensation unit 13b to compensate "Φ (t)" that is half of the detected optical interference. The transmission frequency compensation unit 13b applies a frequency shift of "-Φ (t)" on the optical signal transmitted from the frequency transmission unit 13a.

Therefore, the optical signal received by the frequency reception unit 16a of the optical frequency repeater 16 is subjected to the frequency shift of "-Φ (t)" in advance and then is affected by the fiber noise of "Φ (t)" in the fiber transmission line 20, so that the frequency shift and the fiber noise are canceled out. Therefore, the optical frequency repeater 16 can remove the influence of the fiber noise in the fiber transmission line 20 and output the highly precise signal SG5 similarly to the signal SG2 on the transmission side.

Note that, in some cases, the communication system is configured such that the fiber transmission line 20 is divided into a plurality of sections and a relay station is disposed in a section between a transmission station and a reception station. In a case where the optical frequency repeater 16 illustrated in Fig. 8 is disposed as a relay station, the optical frequency repeater 16 also has a function similar to that of the optical frequency repeater 13 on the transmission side. As a result, the influence of the fiber noise can be removed for each of the plurality of sections of the fiber transmission line 20.

### <Features of Reference Frequency Signal Transmission Method and Frequency Transmission System>

Feature matters related to the reference frequency signal transmission method and the frequency transmission system of the present invention are listed in the following [1] to [6].
[1] A reference frequency signal transmission method, including:
   using a communication system capable of transmitting a highly precise frequency signal between a plurality of communication nodes (N1 and N2) connected to an optical network (30);
   inputting, in a transmission side communication node (communication node N1), a first reference frequency signal (signal SG1) into a first optical frequency comb (12);
   connecting, in the transmission side communication node, an output obtained by converting a frequency of a reference signal into a communication wavelength band while suppressing deterioration in frequency precision by the first optical frequency comb (12) to an input of a first optical frequency repeater (13) having a fiber noise compensation function;
   transmitting an output of the first optical frequency repeater from the transmission side communication node (optical transmission device 14) to the optical network;
   inputting, in a reception side communication node (communication node N2), an optical signal received from the optical network into a second optical frequency repeater (16) having a fiber noise compensation function;
   inputting an output of the second optical frequency repeater into a second optical frequency comb (17); and
   acquiring a second reference frequency signal (signal SG6) as a highly precise frequency signal from an output of the second optical frequency comb.
   According to the reference frequency signal transmission method of [1], because the signal of the reference frequency is transmitted via the optical network using the optical signal converted into the communication wavelength band by the first optical frequency comb, it is possible to transmit the signal without deteriorating precision of the reference frequency. In addition, because the first optical frequency repeater and the second optical frequency repeater are used, the influence of fiber noise generated in the optical network can be removed. This allows supplying a reference frequency signal necessary for maintaining a time error of a time reference device in each place within a standard for hold-over from equipment such as a high-precision frequency reference device in a remote place via the optical network. Therefore, it is not necessary to prepare a plurality of units of equipment such as the high-precision frequency reference device that generates the first reference frequency signal for each place of the time reference device, which allows reducing the cost of the equipment .
[2] The reference frequency signal transmission method according to [1], including:
   executing, in a time reference device 18 (time reference device 18) of the reception side communication node (communication node N2), a time hold-over in the reception side communication node by using the second reference frequency signal (signal SG6) acquired via the optical network.
   According to the reference frequency signal transmission method of [2], in the reception side communication node, the time hold-over is performed using the second reference frequency signal received from the optical network, and thus, even in a case in which the reference time information supplied from the GNSS or the like is interrupted, it is possible to provide the user with information of the reference time with a small time error.
[3] The reference frequency signal transmission method according to [1], including:
   transmitting a first frequency signal from the first optical frequency repeater to the optical network (frequency transmission unit 13a), wherein
   the second optical frequency repeater returns back and transmits a part of the first frequency signal received from the optical network to the optical network (frequency signal return-back unit 16b);
   the first optical frequency repeater detects fiber noise by using optical interference between the first frequency signal before transmission and the first frequency signal returned back and obtained from the optical network (fiber noise detection unit 13d); and
   the first optical frequency repeater compensates for a frequency of the first frequency signal using the detected fiber noise (transmission frequency compensation unit 13b).
   According to the reference frequency signal transmission method of [3], the optical signal actually transmitted via the optical network and returned back at the node on the reception side is acquired on the transmission side, and the optical interference with the first frequency signal before transmission is detected. Therefore, fiber noise actually occurring in the optical network is detected, which allows highly precise frequency compensation. For example, an influence such as a noise variation due to temperature fluctuation can also be compensated.
[4] A frequency transmission system (reference frequency transmission system 100) capable of transmitting a highly precise frequency signal between a plurality of communication nodes (N1 and N2) connected to an optical network (30), the frequency transmission system including:
   a first optical frequency comb (12) disposed in a communication node (N1) on a transmission side and configured to, when a first reference frequency signal (signal SG1) is input, convert a frequency of the reference frequency signal into a communication wavelength band and output the reference frequency signal while suppressing deterioration in frequency precision;
   a first optical frequency repeater (13), disposed in the transmission side communication node, whose input is connected to an output of the first optical frequency comb, and having a fiber noise compensation function;
   a first optical transmission device (14) configured to transmit an output of the first optical frequency repeater from the transmission side communication node to the optical network;
   a second optical transmission device (15) disposed in a reception side communication node and configured to receive the first reference frequency signal from the optical network;
   a second optical frequency repeater (16) disposed in the reception side communication node (N2) and having a function of compensating for fiber noise of an optical signal received by the second optical transmission device;
   a second optical frequency comb (17) disposed in the reception side communication node and whose input is connected to an output of the second optical frequency repeater; and
   a reference frequency acquisition unit (time reference device 18) disposed in the reception side communication node and configured to acquire a second reference frequency signal as a highly precise frequency signal from an output of the second optical frequency comb.
   According to the frequency transmission system having the configuration of [4], because the signal of the reference frequency is transmitted via the optical network using the optical signal generated by the first optical frequency comb, the reference frequency can be transmitted with high quality. In addition, because the first optical frequency repeater and the second optical frequency repeater are used, the influence of fiber noise generated in the optical network can be removed. As a result, it is possible to supply a reference frequency signal necessary for maintaining a time error of a time reference device in each place within a standard for hold-over from equipment in a remote place such as a high-precision frequency reference device via the optical network. Therefore, it is not necessary to prepare a plurality of pieces of equipment such as the high-precision frequency reference device that generates the first reference frequency signal for each place of the time reference device, and the cost of the equipment can be reduced.
[5] The frequency transmission system according to [4], wherein
   the reference frequency acquisition unit (time reference device 18) has a time synchronization function of executing a time hold-over in the reception side communication node by using the second reference frequency signal acquired via the optical network.
   According to the frequency transmission system having the configuration of [5], in the reception side communication node, the time hold-over is performed using the second reference frequency signal received via the optical network, and thus, even in a case in which the reference time information supplied from the GNSS or the like is interrupted, it is possible to provide the user with the information of the reference time with a small time error.
[6] The frequency transmission system according to [4], wherein
   the first optical frequency repeater has a frequency transmission function (frequency transmission unit 13a) of transmitting a first frequency signal to the optical network,
   the second optical frequency repeater has a return-back function (frequency signal return-back unit 16b) of returning back and transmitting a part of the first frequency signal received via the optical network to the optical network, and
   the first optical frequency repeater has a fiber noise detection function (fiber noise detection unit 13d) of detecting fiber noise using optical interference between the first frequency signal before transmission and the first frequency signal returned back and obtained via the optical network and a frequency compensation function (transmission frequency compensation unit 13b) of compensating for a frequency of the first frequency signal to be transmitted using the detected fiber noise.

According to the frequency transmission system having the configuration of [6], the optical signal actually that is transmitted via the optical network and returned back at the node on the reception side is acquired on the transmission side, and the fiber noise is detected by detecting optical interference of the returned back optical signal with the first frequency signal before transmission. Therefore, highly precise frequency compensation can be achieved. For example, an influence such as a noise variation due to temperature fluctuation can also be compensated.

### Reference Signs List

- 11: High-precision frequency reference device
- 12, 17: Optical frequency comb
- 13, 16: Optical frequency repeater
- 13a: Frequency transmission unit
- 13b: Transmission frequency compensation unit
- 13c: Optical interference detection unit
- 13d: Fiber noise detection unit
- 14, 15: Optical transmission device
- 16a: Frequency reception unit
- 16b: Frequency signal return-back unit
- 18: Time reference device
- 20: Fiber transmission line
- 50, 57: Relay network
- 51: Frequency synchronization network
- 51a: High-precision frequency reference device
- 51b, 51c: High-stability frequency synchronization devices
- 52: Time synchronization network
- 52a: High-precision time reference device
- 52b, 52c: High-precision time synchronization device
- 53: GNSS
- 55: Radio base station
- 56: User terminal
- 58, 59: Time information supply device
- 100: Reference frequency transmission system
- 30: Optical network
- N1, N2, N01, N02: Communication node
- SG1, SG2, SG3, SG4, SG5, SG6: Signal

## Claims

1. A reference frequency signal transmission method, comprising:
using a communication system capable of transmitting a highly precise frequency signal between a plurality of communication nodes connected to an optical network;
inputting, at a transmission side communication node, a first reference frequency signal into a first optical frequency comb;
connecting, in the transmission side communication node, an output obtained by converting a frequency of a reference signal into a communication wavelength band while suppressing deterioration in frequency precision using the first optical frequency comb to an input of a first optical frequency repeater having a fiber noise compensation function;
transmitting an output of the first optical frequency repeater from the transmission side communication node to the optical network;
inputting, in a reception side communication node, an optical signal received from the optical network into a second optical frequency repeater having a fiber noise compensation function;
inputting an output of the second optical frequency repeater into a second optical frequency comb; and
acquiring a second reference frequency signal as a highly precise frequency signal from an output of the second optical frequency comb.

2. The reference frequency signal transmission method according to claim 1, comprising:
executing, in the reception side communication node, a time hold-over in the reception side communication node by using the second reference frequency signal acquired via the optical network.

3. The reference frequency signal transmission method according to claim 1, comprising:
transmitting a first frequency signal from the first optical frequency repeater to the optical network,
returning back a part of the first frequency signal received from the optical network and transmitting the returned part to the optical network by the second optical frequency repeater,
detecting fiber noise by using optical interference between the first frequency signal before transmission and the first frequency signal returned back and obtained via the optical network by the first optical frequency repeater, and
compensating for a frequency of the first frequency signal using the detected fiber noise by the first optical frequency repeater.

4. A frequency transmission system capable of transmitting a highly precise frequency signal between a plurality of communication nodes connected to an optical network, the frequency transmission system comprising:
a first optical frequency comb disposed in a communication node on a transmission side and configured to, when a first reference frequency signal is input, convert a frequency of the reference frequency signal and output the converted frequency signal while suppressing deterioration in frequency precision;
a first optical frequency repeater, disposed in the transmission side communication node, an input of which repeater is connected to an output of the first optical frequency comb, and having a fiber noise compensation function;
a first optical transmission device configured to transmit an output of the first optical frequency repeater from the transmission side communication node to the optical network;
a second optical transmission device disposed in a reception side communication node and configured to receive the first reference frequency signal from the optical network;
a second optical frequency repeater disposed in the reception side communication node and having a function of compensating for fiber noise of an optical signal received by the second optical transmission device;
a second optical frequency comb disposed in the reception side communication node and an input of which comb is connected to an output of the second optical frequency repeater; and
a reference frequency acquisition unit disposed in the reception side communication node and configured to acquire a second reference frequency signal as a highly precise frequency signal from an output of the second optical frequency comb.

5. The frequency transmission system according to claim 4, wherein
the reference frequency acquisition unit has a time synchronization function of executing a time hold-over in the reception side communication node by using the second reference frequency signal acquired via the optical network.

6. The frequency transmission system according to claim 5, wherein
the first optical frequency repeater has a frequency transmission function of transmitting a first frequency signal to the optical network,
the second optical frequency repeater has a return-back function of returning back a part of the first frequency signal received from the optical network and transmitting the returned part of the first frequency signal to the optical network, and
the first optical frequency repeater has a fiber noise detection function of detecting fiber noise using optical interference between the first frequency signal before transmission and the first frequency signal returned back and obtained via the optical network and a frequency compensation function of compensating for a frequency of the first frequency signal to be transmitted using the detected fiber noise.

## Amended claims

### Amended claims under Art. 19.1 PCT

1. A reference frequency signal transmission method, comprising:
using a communication system capable of transmitting a highly precise frequency signal between a plurality of communication nodes connected to an optical network;
inputting, at a transmission side communication node, a first reference frequency signal into a first optical frequency comb;
connecting, in the transmission side communication node, an output obtained by converting a frequency of a reference signal into a communication wavelength band while suppressing deterioration in frequency precision using the first optical frequency comb to an input of a first optical frequency repeater having a fiber noise compensation function;
transmitting an output of the first optical frequency repeater from the transmission side communication node to the optical network;
inputting, in a reception side communication node, an optical signal received from the optical network into a second optical frequency repeater having a fiber noise compensation function;
inputting an output of the second optical frequency repeater into a second optical frequency comb; and
acquiring a second reference frequency signal as a highly precise frequency signal from an output of the second optical frequency comb.

2. The reference frequency signal transmission method according to claim 1, comprising:
executing, in the reception side communication node, a time hold-over in the reception side communication node by using the second reference frequency signal acquired via the optical network.

3. The reference frequency signal transmission method according to claim 1, comprising:
transmitting a first frequency signal from the first optical frequency repeater to the optical network,
returning back a part of the first frequency signal received from the optical network and transmitting the returned part to the optical network by the second optical frequency repeater,
detecting fiber noise by using optical interference between the first frequency signal before transmission and the first frequency signal returned back and obtained via the optical network by the first optical frequency repeater, and
compensating for a frequency of the first frequency signal using the detected fiber noise by the first optical frequency repeater.

4. A frequency transmission system capable of transmitting a highly precise frequency signal between a plurality of communication nodes connected to an optical network, the frequency transmission system comprising:
a first optical frequency comb disposed in a communication node on a transmission side and configured to, when a first reference frequency signal is input, convert a frequency of the first reference frequency signal and output the converted frequency signal while suppressing deterioration in frequency precision;
a first optical frequency repeater, disposed in the transmission side communication node, an input of which repeater is connected to an output of the first optical frequency comb, and having a fiber noise compensation function;
a first optical transmission device configured to transmit an output of the first optical frequency repeater from the transmission side communication node to the optical network;
a second optical transmission device disposed in a reception side communication node and configured to receive the first reference frequency signal from the optical network;
a second optical frequency repeater disposed in the reception side communication node and having a function of compensating for fiber noise of an optical signal received by the second optical transmission device;
a second optical frequency comb disposed in the reception side communication node and an input of which comb is connected to an output of the second optical frequency repeater; and
a reference frequency acquisition unit disposed in the reception side communication node and configured to acquire a second reference frequency signal as a highly precise frequency signal from an output of the second optical frequency comb.

5. The frequency transmission system according to claim 4, wherein
the reference frequency acquisition unit has a time synchronization function of executing a time hold-over in the reception side communication node by using the second reference frequency signal acquired via the optical network.

6. The frequency transmission system according to claim 5, wherein
the first optical frequency repeater has a frequency transmission function of transmitting a first frequency signal to the optical network,
the second optical frequency repeater has a return-back function of returning back a part of the first frequency signal received from the optical network and transmitting the returned part of the first frequency signal to the optical network, and
the first optical frequency repeater has a fiber noise detection function of detecting fiber noise using optical interference between the first frequency signal before transmission and the first frequency signal returned back and obtained via the optical network and a frequency compensation function of compensating for a frequency of the first frequency signal to be transmitted using the detected fiber noise.

7. A reference frequency signal transmission method, comprising:
using a communication system capable of transmitting a highly precise frequency signal between a plurality of communication nodes connected to an optical network;
inputting, at a transmission side communication node, a first reference frequency signal into a first optical frequency comb;
connecting, in the transmission side communication node, an output converted into a signal of a communication wavelength band using the first optical frequency comb to an input of a first optical frequency repeater;
transmitting an output of the first optical frequency repeater from the transmission side communication node to the optical network;
inputting, in a reception side communication node, a signal of the communication wavelength band received from the optical network to a second optical frequency repeater;
inputting an output of the second optical frequency repeater into a second optical frequency comb; and
acquiring a second reference frequency signal from an output of the second optical frequency comb.

8. A frequency transmission system capable of transmitting a highly precise frequency signal between a plurality of communication nodes connected to an optical network, the frequency transmission system comprising:
a first optical frequency comb disposed in a transmission side communication node, configured to, when a first reference frequency signal is input, convert the first reference frequency signal into a signal of a communication wavelength band and output the signal;
a first optical frequency repeater disposed in the transmission side communication node, and an input of which repeater is connected to an output of the first optical frequency comb;
a first optical transmission device configured to transmit an output of the first optical frequency repeater from the transmission side communication node to the optical network;
a second optical transmission device disposed in a reception side communication node and configured to receive the signal of the communication wavelength band from the optical network;
a second optical frequency repeater disposed in the reception side communication node and configured to input the signal of the communication wavelength band received by the second optical transmission device;
a second optical frequency comb disposed in the reception side communication node, an input of which comb is connected to an output of the second optical frequency repeater; and
a reference frequency acquisition unit disposed in the reception side communication node and configured to acquire a second reference frequency signal from an output of the second optical frequency comb.

Statement under Art. 19.1 PCT

Content of the amendment
   (1) Claim 7 was added.
   (2) Claim 8 was added.
Description
   (1) Claim 7 is a transcription of claim 1, with the phrase "the frequency of the reference signal is in the communication wavelength band while suppressing deterioration of frequency accuracy" amended to "a signal in the communication wavelength band ." This amendment is based on paragraph 0027 of the originally attached description and does not constitute the addition of new matter .
      The written opinion of the International Searching Authority stated that the invention of claim 1 is novel and involves an inventive step. Claim 7 is a transcription of claim 1 with minor modifications, and is an invention that is novel and involves an inventive step.
   (2) Claim 8 is a transcription of claim 4, with the amendment of "the frequency of the reference signal is in the communication wavelength band while suppressing deterioration of frequency accuracy" to "a signal in the communication wavelength band." This amendment is based on paragraph 0027 of the originally attached description and does not constitute the addition of new matter.
   The written opinion of the International Searching Authority stated that the invention of claim 4 is novel and involves an inventive step. Claim 8 is a transcription of claim 4 with minor modifications, and is also an invention that is novel and involves an inventive step.
